# EUROPÄISCHE PATENTSCHRIFT

(11) **EP 2 105 999 B1**
(45) Veröffentlichungstag und Bekanntmachung des Hinweises auf die Patenterteilung: **14.03.2012**
(21) Anmeldenummer: 09155905.4
(22) Anmeldetag: 23.03.2009
(51) Int. Cl.: H01R 13/66, H01R 13/719, H01R 13/713, G08B 17/10

(54) **Normstecker mit Anzeigeorgan**
Normstecker mit Anzeigeorgan
Interrupteur standard doté d'un organe d'affichage

(30) Priorität: 23.03.2008 DE 202008003987 U; 20.12.2008 DE 202008016970 U
(43) Veröffentlichungstag der Anmeldung: 30.09.2009
(73) Patentinhaber: aizo GmbH, 35578 Wetzlar (DE)
(72) Erfinder: Beck, Wilfried, 65191, Wiesbaden (DE)
(74) Vertreter: Aue, Hans-Peter

(56) Entgegenhaltungen:
- WO-A-03/003324
- DE-A1-102005 025 541
- US-A- 4 737 769
- US-A1- 2005 168 901
- US-A1- 2005 259 383
- US-A1- 2007 290 870
- US-A1- 2008 042 640
- US-B1- 7 258 575
- DATABASE WPI Section EI, Week 200781 Thomson Scientific, London, GB; Class S01, AN 2007-875356 XP002531373 -& CN 1 987 491 A (HAIER GROUP [CN]) 27. Juni 2007 (2007-06-27)

## Beschreibung

Um Geräte mit der ortsüblichen Netzspannung zu versorgen weisen Geräte entweder am Gerät selbst einen genormten Gerätestecker auf, der mit Hilfe einer Kabelkupplung mit einer, meist in einer Wand oder in einer Steckdosenleiste befindlichen Stromversorgung verbindbar ist, oder die Geräte weisen eine am Gerät fest verbundene .Kabelverbindung auf, an deren freiem Ende ein Normstecker zur Verbindung mit der Stromversorgung angebracht ist.

So zeigt die WO-A1-03003324 einen Steckadapter, der einen Normstecker umfasst.

Entsprechende Anschlussleitungen bestehen aus einer flexiblen Zuleitung, die an einer Seite fest mit einem Normstecker, der in Deutschland üblicherweise ein Schukostecker ist, verbunden sind und an der anderen Seite mit einem Gerätestecker ("weibliche", berührungsgeschützte Geräte-Kabelkupplung) verbunden sind. Diese 'Bauweise ermöglicht den Austausch des Anschlusskabels, die Trennung des Gerätes von der Stromversorgung oder die Auslieferung gleichartiger Geräte mit unterschiedlichen Geräte-Anschlussleitungen für die Steckverbinder-Systeme verschiedener Länder.

Als Gerätestecker werden umgangssprachlich Kabelkupplungen beziehungsweise Kabelbuchsen für Netzspannung bezeichnet, die direkt an die Endgeräte eingesteckt werden und der Stromversorgung dieser elektrischen Verbraucher dienen. Am gespeisten Gerät ist dann das Gegenstück (ein Einbaustecker) angebracht.

Die Gerätestecker und -steckdosen zum Anschluß eines Geräts sind international genormt. Hierunter fallen u.a.:
+ Kaltgerätestecker 1EC-60320 C13 / C14
+ Kaltgerätestecker IEC-60320 C19 / C20
+ Warmgeräte- und .Heißgerätestecker C15 und C 15A
+ Kleingerätestecker 1EG-60320-C7
+ "Rasiererstecker" IEC-60320-C1
+ "Kleeblattstecker" IEC-60320-05
+ "Waffeleisenstecker"

Die verschiedenen Typen unterscheiden sich voneinander u.a. in ihrer Strombelastbarkeit, ihrem Schutzleiteranschluss und ihrer Temperaturfestigkeit.

Zur Verbindung mit der Stromversorgung dienen unter anderem die Stecker-Typen A; B; C; D; E; F; 0; H; I; J; K; L; M

Die (spannungsführenden) Kontakte aller Stecker und Steckdosen sind durch Isolierung und eine entsprechende Bauform gegen versehentliches Berühren geschützt.

Es ist Aufgabe der vorliegenden Erfindung einen derartigen Normstecker so weiterzubilden, daß er/sie geeignet ist, Energie einzusparen.

Diese Aufgabe wird durch die Merkmale des unabhängigen Anspruchs gelöst. Vorteilhafte Ausgestaltungen werden durch die Unteransprüche beschrieben.

Prinzipiell wird die Aufgabe gelöst durch einen Normstecker gemäß Anspruch 1. Hierdurch wird bewirkt, daß der Normstecker zugleich ein Anzeigeinstrument ist und daß der Normstecker, wenn die Informationsverarbeitungseinheit mit der Fähigkeit ausgestattet ist, die über den Stecker bereitgestellte Leistung zu beeinflussen, zugleich ein Steuerungsinstrument ist.

Dies hat den Vorteil daß dem potentiellen Bediener eines Steckers am Stecker selbst Informationen bereitgestellt werden können, wie beispielsweise die Information, ob der Bediener die Steckverbindung nun physisch trennen darf.

Dies hat weiterhin den Vorteil, daß der erfindungsgemäße Normstecker selbst in der Lage sein kann, die Leistungszufuhr mit Hilfe der Informationsverarbeitungseinheit zu verändern, wenn diese Informationsverarbeitungseinheit die Möglichkeit der Änderung der Leistungszufuhr, oder sogar der Unterbrechung der Leistungszufuhr umfasst.

Eine weitere vorteilhafte Ausgestaltung dieses Normsteckers bei dem der Informationsverarbeitungseinheit Daten zugeführt werden, die die durch den Stecker bereitgestellte Spannung und / oder den durch den Stecker fließenden Strom und / oder die durch den Stecker bereitgestellte Leistung repräsentieren, bewirkt, daß diese Werte der Leistungsversorgung, des Geräts durch den Bediener des Steckers am Stecker selbst abgelesen werden können und damit der Zustand im Stecker bzw. der durch den Stecker repräsentierte Zustand durch den Bediener inspiziert werden kann.

Eine weitere vorteilhafte Ausgestaltung dieses Normsteckers bei dem der Informationsverarbeitungseinheit Daten zugeführt werden, die den Zustand in der Umgehung des Geräts, das sie mit Leistung versorgen, repräsentieren, bewirkt, daß beispielsweise mit Hilfe eines Sensors Daten von außerhalb des Geräts aufgenommen werden, wie z.B. die Kohlenmonoxidkonzentration, um z.B. einen Brand zu identifizieren, oder die Feuchtigkeit, um z.B. ein ausgelaufenes Gerät, wie z.B. eine ausgelaufene Wachmaschine zu identifizieren. Weiterhin kommen als Sensoren solche zur Aufnahme der Temperatur, des CO2-Werts, des CO-Werts, der Lichteinstrahlung, etc. in Frage.

Wenn der Informationsverarbeitungseinheit Daten zugeführt werden, die den Zustand in der räumlichen Umgebung des Geräts, das sie mit Leistung versorgt, repräsentieren, wobei dieser Zustand die Temperatur und/oder die Feuchtigkeit, ist/sind, hat dies den Vorteil, daß Hausgeräte die einen derartigen Sensor nicht besitzen, mit einem derartigen Stecker, der die Umgehungsdaten aufnimmt, von der Stromzufuhr bzw. Leistungszufuhr getrennt werden können, wenn die durch den Sensor detektierten Umgebungsdaten, die Temperatur und/oder die Feuchtigkeit sind und einen zuvor definierten und im Stecker und / oder Sensor hinterlegten Schwellwert überschreiten, wahrgenommen haben. Dies sichert eine optimale Nachrüstbarkeit.

Hierbei können die Daten mit Hilfe eines innerhalb und/oder außerhalb des Normsteckers angebrachten Sensors dem Normstecker zugeführt werden, was den 'Vorteil hat, daß auch Zustände berücksichtigt werden können die sich nicht in. unmittelbarer Nähe, aber in einer hierdurch frei definierbaren Umgebung stattfinden. So kann im Fall, daß ein entsprechender Sensor nahe des Öltanks angebracht ist und dieser eine Leckage detektiert, die

Stromversorgung entsprechend verbundener Geräte auch in den Nachbarräumen unterbunden werden.

Darüber hinaus ist auch möglich, daß ein Hersteller bei einem möglichen Defekt alle seine Geräte mit der Information versorgen kann, daß diese nicht mehr betrieben werden und eine Rückrufaktion besteht. Dies ist von besonderem Vorteil bei alten Geräten und bei neuen Geräten, die nicht über innovative Möglichkeiten der Datenzuführung verfügen. So kann beispielsweise bei Verwendung eines erfindungsgemäßen Normsteckers der Sensor Daten von außerhalb des Normsteckers aufnehmen, die z.B. die Information, daß sich auf dem Boden eine Wasserschicht gebildet hat, repräsentieren und er kann diese dem Stecker und dem darin befindlichen Anzeigeorgan und/oder der im erfindungsgemäßen Strecker befindlichen Informationsverarbeitungseinheit zuführen, die dann eine Reaktion einleiten kann. Diese Reaktion kann vorher einprogrammiert sein und beispielsweise darin bestehen, am Stecker einen Warnhinweis auszugeben und/oder die Stromzufuhr zum Gerät selbst zu unterbrechen. Ergänzend und/oder alternativ können diese Daten auch mit Hilfe eines Fenübertragungsmittels, wie beispielsweise einer Fernbedienung erfolgen. Als Fernübertragungsmittel sind auch Funk. IR, WiFi, Bussysteme, wie beispielsweise der Strombus, die Powerline etc. geeignet. Eines der geeigneten Fernübertragungsmittel stellt die Stromleitung selbst dar. Eine besonders vorteilhafte Datenübertragung erfolgt mit Hilfe der Energieversorgungsleistung per Wirkleistungsmodulation.

Eine weitere vorteilhafte Ausgestaltung dieses Normsteckers bei dem der Informationsverarbeitungseinheit zusätzlich Daten zugeführt werden, die die durch den Stecker bereitgestellte Spannung und / oder den durch den Stecker .fließenden Strom und / oder die durch den Stecker. bereitgestellte Leistung repräsentieren, bewirkt, daß die Informationsverarbeitungseinheit diese Informationen zu verarbeiten und / oder auszugeben in der Lage ist.

Eine weitere vorteilhafte Ausgestaltung dieses Normsteckers, bei dem die Informationsverarbeitungseinheit auf Basis der durch den Sensor aufgenommenen Umgebungszustände, die durch den Normstecker bereitgestellte Spannung und / oder den durch den Stecker fließenden Strom und / oder die durch den Stecker bereitgestellte Leistung ändert und / oder schaltet, bewirkt, daß der Stecker basierend auf den jeweiligen Umgebungsdaten die Versorgungszufuhr verändern kann, und beispielsweise bei Hochwasser im Falle von detektiertem Wasser unterbinden kann, oder beispielsweise bei einer festgestellten Überhitzung reduzieren kann.

Eine weitere vorteilhafte Ausgestaltung dieses Normsteckers bei dem die mit Hilfe der Informationsverarbeitungseinheit im Normstecker ausgeschaltete Spannung und / oder der ausgeschaltete Strom und / oder die ausgeschaltete Leistung über die Sinuswelle von der Stromquelle in Richtung des elektrischen Geräts bzw. umgekehrt übertragene Informationsdaten kontinuierlich weiter übertragen werden, bewirkt, daß die Informationsübertragung von der Änderung der Versorgungsdaten unabhängig ist. So können im Falle einer Änderung bis hin zur Abschaltung z.B. dennoch die Sensordaten über .z.B. die Stromversorgung z.B. oder Powerline oder Wirkleistungsmodulation vom Sensor ausgehend weiter in den Stecker und von diesem ausgehend weiter in das gesamte Stromnetz übertragen werden.

Eine weitere vorteilhafte Ausgestaltung dieses Normsteckers bei dem im Falle eine fortgeführten Übertragung der Informationsdaten bei gleichzeitiger Unterbrechung des Stroms und/oder der Spannung und/oder der Leistung diese Unterbrechung und/oder diese Fortführung der Übertragung am Normstecker optisch erkennbar ausgegeben werden, bewirkt, daß der Änderungszustand des Sensors am Stecker erkennbar ist.

Eine weitere vorteilhafte Ausgestaltung dieses Normsteckers bei dem der Informationsverarbeitungseinheit Daten zugeführt werden, die einen Status des Geräts, das der Normstecker mit Leistung versorgt, repräsentieren, bewirkt, daß diese Statusse des Geräts durch den Bediener des Steckers am Stecker selbst abgelesen werden können. Dies ist von besonderem Vorteil bei alten Geräten und hei neuen Geräten, die nicht über innovative Möglichkeiten der Inspektion verfügen. So kann beispielsweise bei einem von der Norm abweichenden Verbrauch an Leistung angezeigt werden, daß mit dem Gerät etwas nicht in Ordnung ist. Für den Fall, daß die Informationsverarbeitungseinheit auch über eine Analyseeinheit vertilgt, die geeignet ist, Muster aus dem Strom Spannung herauszufiltern, die für Gerätezustände, wie z.B. Verschleiß, Defekte etc. typisch sind, ist auch dieser Zustand des Geräts durch den Bediener des Steckers am Stecker selbst ablesbar.

Eine weitere vorteilhafte Ausgestaltung dieses Normsteckers bei dem der Informationsverarbeitungseinheit Daten zugeführt werden, die einen Status eines Geräts repräsentieren, das durch diesen Normstecker gerade nicht mit Leistung versorgt wird, bewirkt, daß sich Geräte auch dann untereinander beeinflussen können, wenn sie bauartbedingt eigentlich nicht für eine weitergehende Datenausgabe vorgesehen waren. So kann bei einem defekten Wasserkocher auch ein an einer anderen Steile angestecktes Gerät über dessen erfindungsgemäßen Normstecker mit der Information versorgt werden, daß am Stromnetz ein Gerät in einem kritischen Zustand angeschlossen ist, wobei das Gerät zur selben Gerätekategorie gehören kann, wie das Gerät, welches durch den Normsteck.er selbst angeschlossen ist. In diesem Fall wird an alle z.B. Wasserkocher die Information weitergegeben, daß ein an anderer Stelle angeschlossener z.B. Wasserkocher sich in einem kritischen Zustand befindet. Da die Informationsverarbeitungseinheit programmierbar ist, können die Gerätegruppen frei definiert werden, die sich auf diese Weise untereinander informieren. Alternativ und/oder ergänzend kann dem angeschlossenen Gerät, oder wenn dies z.B. bauartbedingt nicht möglich sein sollte, im Normstecker, und dort beispielsweise in der Informationsverarbeitungseinheit eine Kennung zugewiesen werden, mit deren Hilfe das jeweilige Gerät repräsentiert wird und identifizierbar ist.

Dies gilt in besonderem Maße auch für den Fall, daß das Gerät am selben Stromkreis angeschlossen ist, wie das Gerät, welches durch den Normstecker selbst angeschlossen ist.

Eine weitere vorteilhafte Ausgestaltung dieses Normsteckers, bei der die Informationsverarbeitungseinheit am Einsatzort des Normsteckers von außerhalb des Normsteckers programmierbar ist, bewirkt außerdem, daß der Zustand des Steckers von außerhalb des Steckers. also von außerhalb des Normsteckers beeinflusst werden kann. Diese Fernbeeinflussbarkeit hat den Vorteil, daß auch Geräte aus der Ferne beeinflussbar sind, welche alt sind und daher noch nicht über moderne Beeinflussungsmöglichkeiten verfügen, und daß auch moderne Geräte aus der Ferne beeinflussbar sind, bei welchen aus Kostengründen auf eine Fernbeeinflussbarkeit verzichtet wurde. So kann beispielsweise in dem Fall, daß ein Gerät angeschlossen ist, welches nicht im .Standby betrieben werden soll, einprogrammiert werden, daß im Fall des Standbybetriebs eine zusätzliche Funktion bewirkt werden soll, wie beispielsweise die Ausgabe eines Warnhinweises, oder im Fall, daß der erfindungsgemäße Stecker eine Unterbrechung der Leistungszufuhr erlaubt, diese ganz. zu unterbrechen.

Die Ausgestaltung dieses Normsteckers bei dem die der Informationsverarbeitungseinheit zugeführten Daten mit den durch das Anzeigeorgan ausgegebenen Informationen korrespondieren, bewirkt außerdem, daß der Zustand der Anzeige des Steckers den Zustand des Steckers nach außen sichtbar wiedergibt. Diese Wiedergabe hat den Vorteil, daß der Bediener des Steckers Informationen am Stecker erhält, die er in seine Entscheidung einfließen lassen kann. Hierbei können der Informationsverarbeitungseinheit die Daten, die ihr zugeführt werden, in digitaler Gestalt ausgegeben werden.

So kann der Normstecker weiterhin so eingestellt sein, daß er im Anzeigeorgan einen Warmhinweis ausgibt, indem beispielsweise im Fall, daß Informationen durch das Anzeigeorgan über einen Farbcode ausgegeben werden können, dies mit Hilfe dieses Farbcodes geschieht. Ein vorteilhafter Farbcode ist hierbei der Rot-Grün-Gelb-Code, der beispielsweise durch eine RGB-LED bereitgestellt werden kann. Dies kann beispielsweise im Fall geschehen, daß das angeschlossene Gerät, beispielsweise ein Computer, noch angeschaltet ist und Strom zieht. Hierdurch kann vermieden werden, daß der Bediener den Computer statt ihn ordnungsgemäß herunterzufahren, einfach durch Trennen von der Stromversorgung ausschaltet. -Hierbei kann "grün" signalisieren, daß alles in Ordnung ist, und der Stecker gezogen werden kann "gelb" daß ein Warnhinweis vorhanden ist und "rot", daß der Stecker nicht gezogen werden darf. Das Anzeigeorgan kann darüber hinaus auch dazu genutzt werden, einen notwendigen Service anzuzeigen, beispielsweise durch Blinken des Anzeigeorgans. In einem solchen Fall sind RGB-LEDs vorteilhaft, wenn ein Display zu teuer wäre,

Auch kann der Stecker eine Vorrichtung umfassen, welche es erschwert, bzw. unmöglich macht, bei- Vorhandensein einer einstellbaren Hinweisstufe, die Verbindung physisch zu trennen. So kann beispielsweise sichergestellt werden, daß Geräten im laufenden Betrieb, wie z.B. Drucker, Computer, Server etc. nicht bei laufenden Betrieb die Stromzufuhr gekappt wird. Hierdurch wird die Gefahr des Datenverlusts minimiert.

Eine weitere vorteilhafte Ausgestaltung dieses Normsteckers bei .dem die Informationsverarbeitungseinheit eine Messvorrichtung umfaßt bewirkt außerdem, daß die Zustände im Normstecker gemessen werden können und dann z.B. durch das Anzeigeorgan ausgegeben werden können, oder an eine dritte Stelle, z.B. an eine Zentrale des Herstellers, oder dem Energieversorgungsunternehmen, oder einer hausinternen Messstelle bzw. Auswertestelle, z.B. einem Computer zur Verfügung gestellt werden können. oder als Daten der Informationsverarbeitungseinheit zur Verfügung gestellt werden können. Wenn die Messvorrichtung geeignet ist, Strom und/oder Spannung und/oder Leistung zu messen, die durch den Normstecker bereitgestellt werden, so sind Strom und/oder Spannung und/oder Leistung am Stecker ablesbar, bzw. können als Daten der Informationsverarbeitungseinheit zur Verfügung gestellt. werden können.

Eine weitere vorteilhafte Ausgestaltung dieses Normsteckers bei dem die Informationsverarbeitungseinheit geeignet ist, im Normstecker die Leistungszufuhr zu verändern, bewirkt außerdem, daß das angeschlossene Gerät beispielsweise auf Basis der zugeführten Daten heruntergefahren, oder sogar ausgeschalten werden kann, indem z.B. die Veränderung der Leistungszufuhr in einer Unterbrechung der Leistungszufuhr besteht.

Eine weitere vorteilhafte Ausgestaltung dieses Normsteckers bei der Normstecker ein Kaltgerätestecker IEC-60320 C13 / C14 und/oder ein Kaltgerätestecker IEC-60320 C19 / C20 und/oder ein Warmgeräte- und Heißgerätestecker C15 und C15A und/oder ein Kleingerätestecker IEC-60320-C7 und/oder ein Rasierersteck.er IEC-60320-C1 und/oder ein Kleeblattstecker 1EC:-60320-05 und/oder ein Waffeleisenstecker und/oder ein Stecker der Typen A; B; C; D; E; F; G; H; I; .J; K; M ist, besteht darin, daß ein erfindungsgemäßer Normstecker weltweit eingesetzt werden kann. Das gilt auch für den Einsatz eines erfindungsgemäßen Normsteckers als Adapter zur Verbindung zwischen diesen aufgeführten Steckertypen, bzw. zur Verbindung mit nicht normgerechten Steckern. Insbesondere ist ein erfindungsgemäßer Normstecker für die Zufuhr der örtlichen "Netzwechselspannung von beispielsweise 220 und/oder 240 Volt Wechselspannung vorgesehen.

Die erfindungsgemäße Aufgabe wird weiterhin auch durch ein Verbindungskabel, umfassend mindestens einen erfindungsgemäßen Normstecker gelöst, was den Vorteil mit sich bringt, daß mit Hilfe der an die jeweiligen Länder angepassten Kabelpeitschen .einheitliche Geräte produziert und ausgeliefert werden können.

Die erfindungsgemäße Aufgabe wird weiterhin auch durch eine Elektroinstallation, umfassend mindestens einen erfindungsgemäßen Normstecker gelöst, was den Vorteil mit sich bringt, daß die Elektroinstallation als Fernkommunikationsmittel zwischen den einzelnen erfindungsgemäßen .Normstecker dient, wodurch auf Funk, IR, WiFi etc. verzichtet werden kann. Wen sich diese Elektroinstallation in einem Gebäude befindet, kann das Gebäude als Grenze für die Kommunikation von Geräten untereinander dienen.

Weitere bevorzugte Ausgestaltungen umfassen einen derartigen Normstecker: wobei die Informationsverarbeitungseinheit am Einsatzort des Normsteckers von außerhalb des Normsteckers programmierbar ist, wobei die der Informationsverarbeitungseinheit zugeführten Daten mit der durch das Anzeigeorgan ausgegebenen Informationen korrespondieren, wobei die Informationsverarbeitungseinheit die Daten, die ihr zugeführt werden, in digitaler Gestalt ausgibt.
+ wobei die Informationen durch das Anzeigeorgan über einen Farbcode ausgegeben werden.
+ wobei das Anzeigeorgan eine RGB-Diode ist.
+ wobei die Informationsverarbeitungseinheit eine Messvorrichtung umfaßt.
+ wobei die Messvorrichtung geeignet ist, Strom und/oder Spannung und/oder Leistung zu messen. die durch den Normstecker bereitgestellt werden.
+ wobei die Informationsverarbeitungseinheit geeignet ist im Normstecker die Leistungszufuhr zu verändern.
+ wobei die Veränderung der Leistungszufuhr auf Basis der zugeführten Daten geschieht.
+ wobei die Veränderung der Leistungszufuhr in einer Unterbrechung der Leistungszufuhr besteht.
+ wobei der Normstecker ein Kaltgerätestecker IEC-60320 CI3 C14 und/oder ein Kaltgerätestecker IEC-60320 C19 / C20 und/oder ein Warmgeräte- und Heißgerätestecker C15 und C15A und/oder ein Kleingerätestecker IEC-60320-C7 und/oder ein Rasiererstecker IEC-60320-C1 und/oder ein Kleeblattstecker 113C-60320-05 und/oder ein Waffeleisenstecker und/oder ein Stecker der Typen A; B; C; D; E; F; G; H;I; J; K; L; M ist.

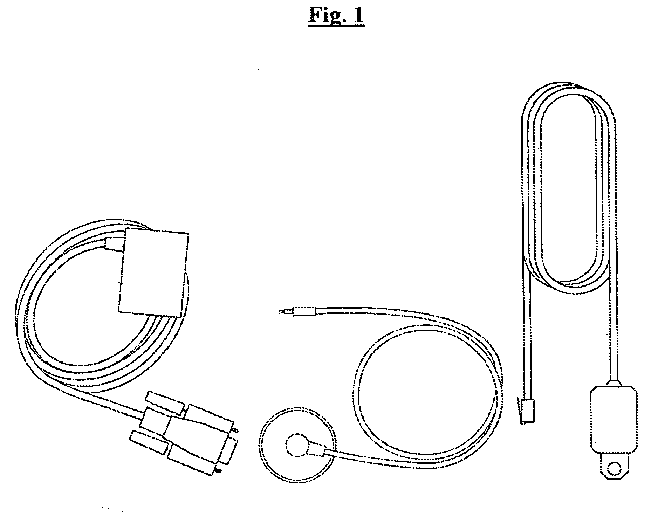

Besondere Ausführungsformen ergeben sich aus der Fig. Hierbei zeigen die
Fig. 1 einen Überblick über in Frage kommende Sensoren schematisiert dargestellt;

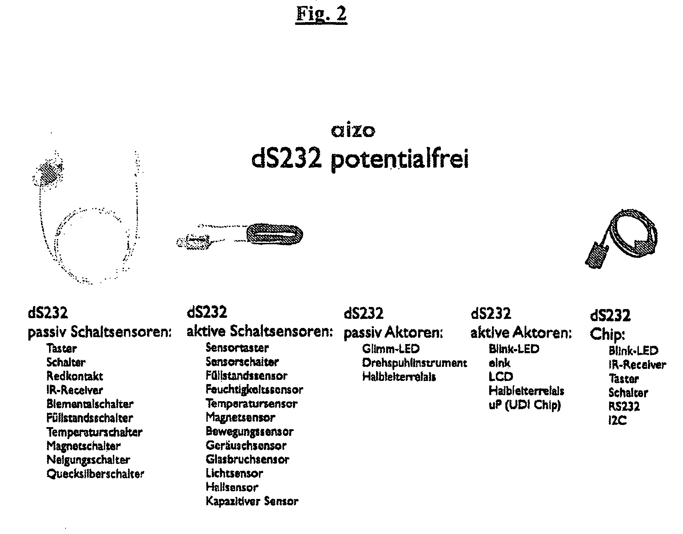

Fig. 2 einen Überblick über in Frage kommende Sensoren;

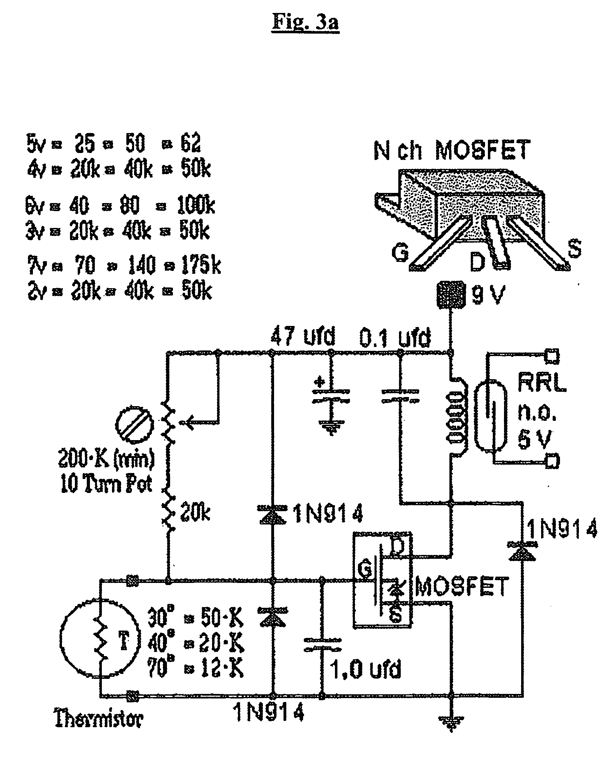

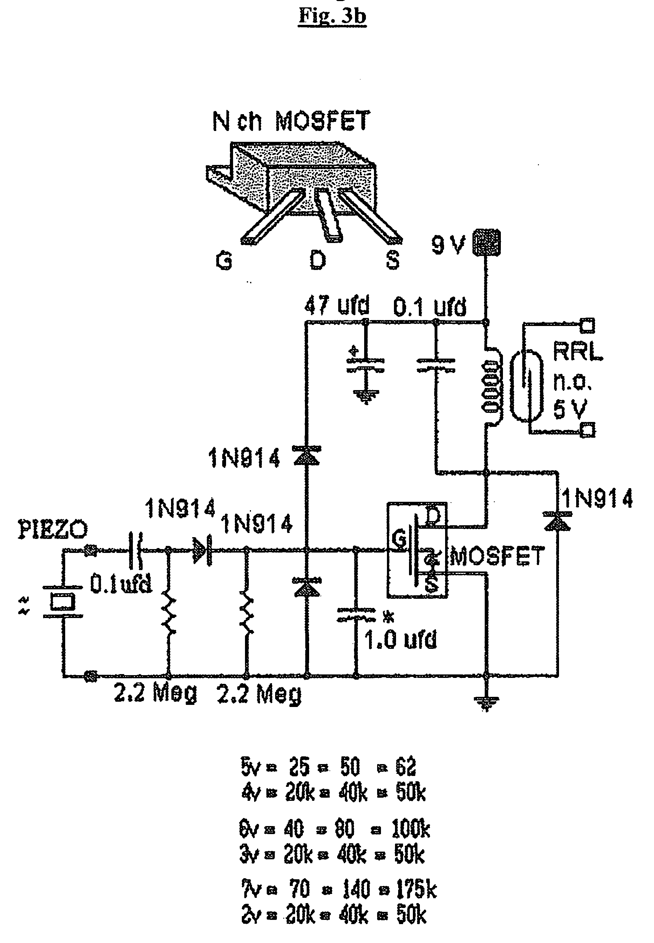

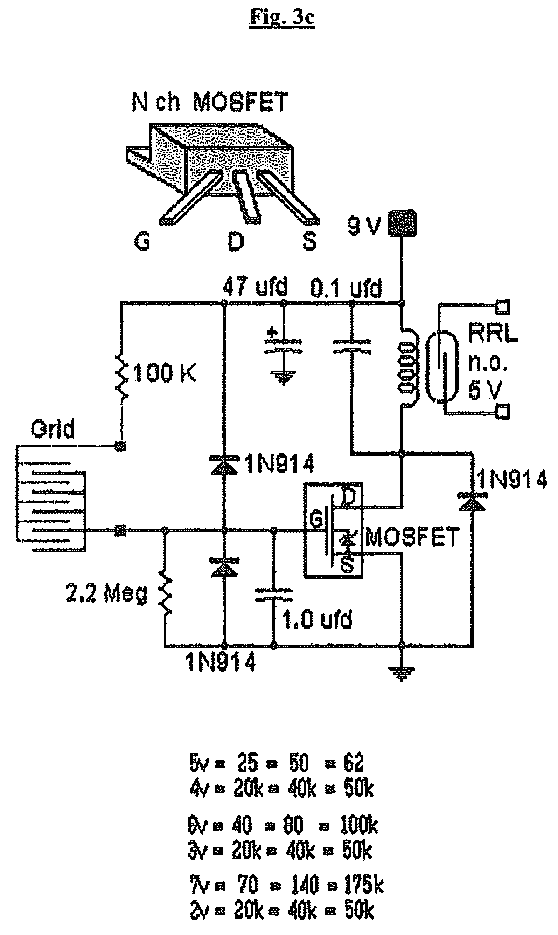

Fig. 3a, 3b, 3c Vorschläge zur Schaltungsauslegung für diverse Sensoren.

## Patentansprüche

1. Normstecker für die Verbindung eines elektrischen Geräts mit einer in der Wand oder Steckdosenleiste befindlichen Stromversorgung, umfassend: Steckelemente, wobei die Steckelemente eine männliche und/oder weibliche Gestalt aufweisen, ein isolierendes Gehäuse, wobei die Steckelemente normgerecht im isolierenden Gehäuse des Normsteckers angeordnet sind, ein Anzeigeorgan, das derart im Gehäuse des Normsteckers angeordnet ist, daß dessen Anzeige von außen erkennbar ist, eine Informationsverarbeitungseinheit, wobei die Informationsverarbeitungseinheit im isolierenden Gehäuse angeordnet ist, wobei ihr Daten zuführbar sind und sie das Anzeigeorgan auf Basis dieser Daten mit Ausgabeinformationen versorgt, **dadurch gekennzeichnet, daß** der Informationsverarbeitungseinheit Daten zugeführt werden, die den Zustand in der räumlichen Umgebung des Geräts, das sie mit Leistung versorgen, repräsentieren, wobei dieser Zustand der CO2-Wert, und/oder der CO-Wert, und/oder die Lichteinstrahlung, und/oder die Schwebstoffe, und/oder Rauch, und/oder Schadstoff(e) und/oder Gefahrstoffe ist/sind, **dadurch gekennzeichnet, daß** die Informationsverarbeitungseinheit programmierbar ist.

2. Normstecker nach Anspruch 1, wobei der Informationsverarbeitungseinheit Daten zugeführt werden, die den Zustand in der räumlichen Umgebung des Geräts, das sie mit Leistung versorgen, repräsentieren, wobei dieser Zustand die Temperatur und/oder die Feuchtigkeit ist/sind.

3. Normstecker nach einem der zuvor genannten Ansprüche, wobei die Daten mit Hilfe eines innerhalb und/oder außerhalb des Normsteckers angebrachten Sensors dem Normstecker zugeführt werden.

4. Normstecker nach einem der zuvor genannten Ansprüche, wobei die Informationsverarbeitungseinheit mit der Fähigkeit ausgestattet ist, die über den Stecker bereitgestellte Leistung zu beeinflussen.

5. Normstecker nach einem der zuvor genannten Ansprüche, wobei die Daten mit Hilfe eines Fernübertragungsmittels von außerhalb des Normsteckers dem Normstecker zugeführt werden.

6. Normstecker nach einem der zuvor genannten Ansprüche, wobei der Informationsverarbeitungseinheit zusätzlich Daten zugeführt werden, die die durch den Stecker bereitgestellte Spannung und / oder den durch den Stecker fließenden Strom und / oder die durch den Stecker bereitgestellte Leistung repräsentieren.

7. Normstecker nach einem der zuvor genannten Ansprüche, wobei die Informationsverarbeitungseinheit auf Basis der durch den Sensor aufgenommenen Umgebungszustände, die durch den Normstecker bereitgestellte Spannung und / oder den durch den Stecker fließenden Strom und / oder die durch den Stecker bereitgestellte Leistung ändert und/oder schaltet.

8. Normstecker nach einem der zuvor genannten Ansprüche, wobei im Fall der mit Hilfe der Informationsverarbeitungseinheit im Normstecker ausgeschalteten Spannung und / oder ausgeschaltetem Strom und / oder ausgeschalteten Leistung über die Sinuswelle von der Stromquelle in Richtung des elektrischen Geräts bzw. umgekehrt übertragene Informationsdaten kontinuierlich weiter übertragen werden.

9. Normstecker nach einem der zuvor genannten Ansprüche, wobei im Falle einer fortgeführten Übertragung der Informationsdaten bei gleichzeitiger Unterbrechung des Stroms und/oder der Spannung und/oder der Leistung diese Unterbrechung und/oder diese Fortführung der Übertragung am Normstecker optisch erkennbar ausgegeben werden.

10. Normstecker nach einem der zuvor genannten Ansprüche, wobei die Datenüberragung mit Hilfe der Energieversorgungsleistung per Wirkleistungsmodulation erfolgt.

11. Normstecker nach einem der zuvor genannten Ansprüche, wobei der Informationsverarbeitungseinheit Daten zugeführt werden, die einen Status des Geräts, das der Normstecker mit Leistung versorgt, repräsentieren.

12. Normstecker nach einem der zuvor genannten Ansprüche, wobei der Informationsverarbeitungseinheit Daten zugeführt werden, die einen Status eines Geräts repräsentieren, das durch diesen Normstecker gerade nicht mit Leistung versorgt wird.

13. Normstecker nach einem der zuvor genannten Ansprüche, wobei das Gerät zur selben Gerätekategorie gehört, wie das Gerät, welches durch den Normstecker selbst angeschlossen ist.

14. Normstecker nach einem der zuvor genannten Ansprüche, wobei das Gerät am selben Stromkreis angeschlossen ist, wie das Gerät, welches durch den Normstecker selbst angeschlossen ist.

15. Elektroinstallation, umfassend mindestens einen Normstecker nach einem der zuvor genannten Ansprüche.

## Claims

1. Standard plug connector capable to connect an electric appliance to the power supply fitting in a wall or in a connection plug board, comprising: plug connector elements, whereby said plug connector elements provide a male and/or a female shape, an isolated housing, whereby said plug connector elements are positioned conforming to standards in said isolated housing of said standard plug connector, an indicator element, which is positioned in said housing in such a manner, that its indicator can be seen from the outside, an Information processing unit, whereby said information processing unit is positioned in said isolating housing, whereby it can be supplied with data and whereby said information processing unit supplies said indicator element with information, **characterized in that** said information processing unit gets supplied with data, representing the condition of the surrounding space of said appliance which is herewith supplied with power, whereby said condition is the CO2-value, and/or the CO-value, and/or the light irradiation, and/or the airborne particles, and/or smoke, and/or noxious substance(s) and/or hazardous material, whereby said information processing unit can be programmed.

2. Standard plug connector according to claim 1, whereby said information processing unit is supplied with data, representing the condition of the surrounding space of said appliance which is herewith supplied with power, whereby said condition is the temperature and/or the humidity.

3. Standard plug connector according to one of the claims 1 to 2 whereby the standard plug connector is supplied with data by help of a sensor connected to the inside and/or outside said standard plug connector.

4. Standard plug connector according to one of the claims 1 to 3, whereby said information processing unit is provided with the capability to adapt the power supplied by said connector.

5. Standard plug connector according to one of the claims 1 to 4, whereby the data are fed to said standard plug connector from outside of said standard plug connector by help of far distance communication means.

6. Standard plug connector according to one of the claims 1 to 5, whereby said information processing unit is fed with additional data representing voltage provided by said connector and/or the current provided by said connector and/or the power provided by said connector.

7. Standard plug connector according to one of the claims 1 to 6, whereby said information processing unit is switching and/or changing said voltage provided by said standard plug connector and/or said current provided by said standard plug connector and/or said power provided by said standard plug connector on the basis of the surrounding conditions identified by said sensor.

8. Standard plug connector according to one of the claims 1 to 7, whereby information transmission from the power source towards said electric appliance via the sinus wave is continued also in case that the information processing unit switched off voltage and/or switched off current and/or switched off power by said information processing unit in said standard plug connector.

9. Standard plug connector according to one of the claims 1 to 8, whereby in case of a continuing transmission of information data during said interruption of said current and/or voltage and/or power, said interruption is indicated visually on said standard plug connector.

10. Standard plug connector according to one of the claims 1 to 9, whereby said data is transmitted via said power-line by help of modulation of the effective power.

11. Standard plug connector according to one of the claims 1 to 10, whereby the information processing unit is supplied with data, representing the status of an appliance which said standard plug connector is feeding with power.

12. Standard plug connector according to one of the claims 1 to 11, whereby said information processing unit is fed with data, representing the status of an appliance which is not yet fed with power by said standard plug connector.

13. Standard plug connector according to one of the claims 1 to 12, whereby said appliance belongs to the same category as the appliance connected by said standard plug connector.

14. Standard plug connector according to one of the claims 1 to 13, whereby said appliance is connected to the same circuit, as the appliance connected by said standard plug connector itself.

15. Electrical installation comprising at least one standard plug connector according to one of the claims 1 to 14.

## Revendications

1. Connecteur standard pour relier un appareil électrique à une alimentation électrique se trouvant dans un mur ou dans un bloc multiprise, comprenant : des éléments enfichables, les éléments enfichables présentant une forme mâle et/ou femelle, un boîtier isolant, la disposition des éléments enfichables dans le boîtier isolant du connecteur standard étant conforme aux normes, un organe d'affichage disposé dans le boîtier isolant du connecteur standard de façon que son affichage soit reconnaissable de l'extérieur, une unité de traitement de l'information, laquelle unité de traitement de l'information est disposée dans le boîtier isolant, est susceptible d'être alimentée avec des données et approvisionne l'organe d'affichage en informations de sortie sur la base de ces données, **caractérisé en ce que** l'unité de traitement de l'information est alimentée avec des données qui représentent les conditions dans l'environnement spatial de l'appareil qu'elles alimentent en puissance, ces conditions étant la valeur de CO2, et/ou la valeur de CO, et/ou la radiation incidente de lumière, et/ou les matières en suspension, et/ou la fumée, et/ou un ou des polluants, et/ou des substances dangereuses, ladite unité de traitement de l'information étant programmable.

2. Connecteur standard selon la revendication 1, dans lequel l'unité de traitement de l'information est alimentée avec des données qui représentent les conditions dans l'environnement spatial de l'appareil qu'elles alimentent en puissance, ces conditions étant la température et/ou l'humidité.

3. Connecteur standard selon l'une des revendications précédentes, dans lequel les données sont fournies au connecteur standard à l'aide d'un capteur installé à l'intérieur et/ou à l'extérieur du connecteur standard.

4. Connecteur standard selon l'une des revendications précédentes, dans lequel l'unité de traitement de l'information est dotée de la capacité d'influer sur la puissance fournie à travers le connecteur.

5. Connecteur standard selon l'une des revendications précédentes, dans lequel les données sont fournies de l'extérieur au connecteur standard, à l'aide d'un moyen de télétransmission.

6. Connecteur standard selon l'une des revendications précédentes, dans lequel l'unité de traitement de l'information est alimentée en outre avec des données qui représentent la tension fournie par le connecteur, et/ou le courant traversant le connecteur, et/ou la puissance fournie par le connecteur.

7. Connecteur standard selon l'une des revendications précédentes, dans lequel l'unité de traitement de l'information modifie et/ou commute la tension fournie par le connecteur, et/ou le courant traversant le connecteur, et/ou la puissance fournie par le connecteur, sur la base des conditions d'environnement recueillies par le capteur.

8. Connecteur standard selon l'une des revendications précédentes, dans lequel en cas de coupure de la tension, et/ou coupure du courant, et/ou coupure de la puissance dans le connecteur à l'aide de l'unité de traitement de l'information, les données d'information transmises via l'onde sinusoïdale de la source de courant en direction de l'appareil électrique ou inversement, continuent à être transmises de façon continue.

9. Connecteur standard selon l'une des revendications précédentes, dans lequel en cas de poursuite de la transmission des données d'information avec interruption simultanée du courant et/ou de la tension et/ou de la puissance, cette interruption et/ou cette poursuite de la transmission s'affichent sur le connecteur standard de manière optiquement reconnaissable.

10. Connecteur standard selon l'une des revendications précédentes, dans lequel la transmission des données est effectuée à l'aide de la puissance d'alimentation en énergie par modulation de la puissance active.

11. Connecteur standard selon l'une des revendications précédentes, dans lequel l'unité de traitement de l'information est alimentée avec des données qui représentent un état de l'appareil alimenté en puissance par ledit connecteur standard.

12. Connecteur standard selon l'une des revendications précédentes, dans lequel l'unité de traitement de l'information est alimentée avec des données qui représentent un état de l'appareil justement non alimenté en puissance par ledit connecteur standard.

13. Connecteur standard selon l'une des revendications précédentes, l'appareil appartenant à la même catégorie d'appareils que l'appareil branché par le connecteur standard lui-même.

14. Connecteur standard selon l'une des revendications précédentes, l'appareil étant branché sur le même circuit électrique que l'appareil branché par le connecteur standard lui-même.

15. Installation électrique, comprenant au moins un connecteur standard selon l'une des revendications précédentes.
